Europäisches Patentamt

European Patent Office

Office européen des brevets

(11) Numéro de publication: **0 423 104 A1**

# (12) DEMANDE DE BREVET EUROPEEN

(21) Numéro de dépôt: 90870181.6

(22) Date de dépôt: **12.10.90**

(51) Int. Cl.5: **G01D 7/12**, G01D 5/34

(30) Priorité: **13.10.89 FR 8913871**

(43) Date de publication de la demande:
**17.04.91 Bulletin 91/16**

(84) Etats contractants désignés:
**AT BE CH DE DK ES FR GB GR IT LI LU NL SE**

(71) Demandeur: **Poulain, Claude**
**Route d'Ondes**
**F-82170 Grisolles(FR)**

(72) Inventeur: **Poulain, Claude**
**Route d'Ondes**
**F-82170 Grisolles(FR)**

(74) Mandataire: **Dellicour, Paul**
**Office de Brevets E. Delliccur rue Fabry**
**18/012**
**B-4000 Liège(BE)**

(54) **Procédé de détection du positionnement relatif d'un indicateur à aiguille, et dispositif électronique permettant de le mettre en oeuvre.**

(57) L'invention concerne un procédé de détection du positionnement relatif d'un indicateur à aiguille 2 se déplaçant devant un fond 1 d'un compteur du type contrôle de vitesse ou compte-tours d'engins de locomotion motorisés.

Ce procédé consiste :
- à repérer le passage du susdit indicateur à aiguille 2 se déplaçant devant ledit fond 1, à l'aide d'un émetteur d'un rayon incident Si et d'un récepteur d'un rayon réfléchi Sr placés coplanairement dans un même boîtier-détecteur 4, entre le conducteur et l'écran transparent 3 protégeant l'indicateur à aiguille 2, et en face de la graduation 1a, 1b, 1c,... du fond 1 à ne pas dépasser, de telle sorte que, lorsque l'indicateur à aiguille 2 passe devant la susdite graduation, le rayon incident Si émis par ledit émetteur est renvoyé, par réflexion sur la surface dudit indicateur à aiguille 2, sous la forme d'un rayon réfléchi Sr que le susdit récepteur sera capable de capter,
- à interpréter le susdit rayon réfléchi Sr capté par ledit récepteur pour le transformer en un signal de commande logique,
- et à activer, à l'aide dudit signal de commande logique, un avertisseur électronique sonore 11.

L'invention concerne également un dispositif électronique permettant de mettre en oeuvre ce procédé de détection.

Fig. 2

# PROCEDE DE DETECTION DU POSITIONNEMENT RELATIF D'UN INDICATEUR A AIGUILLE, ET DISPOSITIF ELECTRONIQUE PERMETTANT DE LE METTRE EN OEUVRE

La présente invention a trait au domaine de l'automobile, et intéresse plus particulièrement un procédé de détection, lié à un avertisseur sonore de dépassement de vitesse.

L'automobile d'aujourd'hui ne se trouve plus placée dans le même contexte qu'il y a une vingtaine d'années. En effet, le parc automobile et son trafic ont largement augmenté, le réseau routier également, mais dans des proportions qui ne peuvent pas être aussi rapides, donnant ainsi l'obligation d'aménagement de voies autorisant les grandes vitesses.

Les automobiles, sur un plan purement technique, ont évolué faisant bénéficier à leurs conducteurs de moteurs plus puissants, de meilleur rendement, donc moins gourmands en carburant. Le rythme de notre vie lui-même a changé, nous obligeant à des déplacements fréquents, souvent de courte durée, tout en respectant des horaires de rendez-vous professionnels fixés à l'avance.

L'attention toute particulière aux réglementations en vigueur du code de la route, que tout conducteur devrait avoir à chaque instant de conduite, notamment en matière de respect de la limitation de vitesse autorisée, s'estompe souvent, tellement la route est bonne, tellement le moteur de l'automobile est souple, et tellement l'esprit est occupé ailleurs.

De leur côté, les pouvoirs publics multiplient les contrôles de vitesse d'engins motorisés, à l'aide de matériel électronique très sophistiqué, ne laissant guère de chance au conducteur inattentionné. Le montant des primes accompagnant ce genre de verbalisation ne laisse plus indifférent, et invite généralement les conducteurs à redoubler de prudence, en faisant leur auto-contrôle de vitesse.

Le rôle de l'indicateur de vitesse placé dans le tableau de bord de chaque véhicule, n'a pas d'autre fonction que d'aider le conducteur à celà. Cet indicateur numérique ou analogique n'est malheureusement que visuel, et ne peut à tout instant être perçu par le conducteur puisque l'analyse de son comportement montre qu'à tout moment, son champ de vision est quasiment celui du devant extérieur de sa voiture, et non pas celui du tableau de bord intérieur, pour des raisons que l'on comprend aisément.

Conscient de ce problème, et parce que sensible lui-même aux améliorations à apporter dans le domaine de la sécurité automobile et routière, le demandeur propose une création originale permettant de pallier au phénomène d'inattention du conducteur face à la vitesse de son véhicule, en transformant le signal d'indication visuelle, en un signal audible, l'ouïe étant l'organe sensoriel le plus disponible, et le mieux adapté dans ces moments là.

Bien sûr, de nombreuses recherches dans ce domaine, ont déjà abouti à diverses solutions souvent complexes. On connaît notamment les systèmes d'alarme directement liés à des capteurs de mouvements mécaniques du câble de transmission reliant boîte de vitesse et compteur du véhicule. Ces procédés occasionnent une modification mécanique du dit câble et donc nécessitent l'intervention d'un spécialiste.

D'autres systèmes avertisseurs de dépassement de vitesse, fonctionnent à l'aide de contacts électriques entre l'indicateur à aiguille, et des bornes amovibles et/ou présélectionnables par un clavier. Ils engendrent de profondes modifications dans la conception du compteur placé dans le tableau de bord du véhicule. Ils ne peuvent donc s'imaginer qu'en montage d'origine. Cependant, la plupart des véhicules actuels n'en sont pas équipés, démontrant ainsi leur désadaptation fonctionnelle.

Il existe également une forme particulière de compteur de vitesse tel que celui décrit et représenté dans le brevet français n,2.414.421, dont l'aiguille est remplacée par un disque tournant muni de fentes, lesdites fentes venant à des endroits judicieusement choisis, découvrir le passage d'un rayon lumineux émis par une ampoule vers une photodiode, déclenchant ainsi une alarme audible. Dans cette application aussi, le procédé touche une fabrication particulière qui ne peut s'entendre que sur un montage d'origine dans les véhicules.

Beaucoup plus récemment, l'électronique a fait développer aux constructeurs d'automobiles des avertisseurs vocaux capables d'interpeller le conducteur lors d'un dépassement de vitesse autorisée, ou lors d'un oubli quelconque concernant la sécurité. Ces systèmes font appel à une circuiterie assez complexe dont le déclenchement est directement lié à l'allumage électronique des véhicules. Ils sont donc montés d'origine sur les automobiles, et bien sur par des spécialistes. De plus, ils n'équipent que les modèles haut de gamme.

Faisant le bilan de ces constatations, le demandeur a imaginé un nouveau procédé audacieux de détection de dépassement de vitesse, basé sûr deux principes fondamentaux : la simplicité de mise en oeuvre et l'adaptabilité dudit procédé à tous les véhicules possédant un compteur analogique traditionnel, dont l'aiguille se déplaçant devant un fond gradué indique la vitesse.

Selon l'invention ce procédé de détection est remarquable en ce qu'il consiste :

- à repérer le passage du susdit indicateur à aiguille, se déplaçant devant un fond, généralement non réfléchissant, à l'aide d'un émetteur de rayon incident et d'un récepteur d'un rayon réfléchi placés coplanairement dans un même boîtier-détecteur, entre le conducteur et l'écran transparent protégeant l'indicateur à aiguille, et en face de la graduation du fond à ne pas dépasser, de telle sorte que, lorsque l'indicateur à aiguille passe devant la susdite graduation, le rayon incident émis par ledit émetteur est renvoyé, par réflexion sur la surface dudit indicateur à aiguille sous la forme d'un rayon réfléchi que sera capable de capter le susdit récepteur,

- à interpréter le susdit rayon réfléchi capté par ledit récepteur pour le transformer en un signal de commande logique,

- et à activer, à l'aide dudit signal de commande logique, un avertisseur électronique sonore.

Selon l'invention, ce procédé est remarquable en ce qu'il ne modifie en rien les équipements électriques déjà installés sur le véhicule, se contentant d'exploiter judicieusement leur conception. On comprend, qu'en plaçant le boîtier-détecteur, équipé de l'émetteur et du récepteur d'un rayon lumineux, en face d'une graduation du fond à ne pas dépasser, le passage de l'indicateur à aiguille se déplaçant devant cette graduation sera décelé grâce à la captation par le récepteur du rayon émis par l'émetteur et qui vient se réfléchir sur la surface dudit indicateur à aiguille. Ce rayon réfléchi capté sera alors interprété électroniquement pour être transformé en un signal de commande logique qui actionnera un signal audible qui avertira ainsi le conducteur qu'il a dépassé la vitesse correspondant à la graduation du fond, limite qu'il s'est fixé en positionnant le susdit boîtier-détecteur en face.

L'intérêt de ce boîtier-détecteur est donc de travailler par différence de réflexions du signal émis par l'émetteur entre la surface réfléchissante plus proche du susdit indicateur à aiguille et la surface non-réfléchissante dudit fond portant les graduations. En effet, le récepteur qui est capable de capter le rayon qui sera réfléchi sur la surface de l'indicateur à aiguille, ne pourra pas capter le rayon réfléchi sur la surface du fond du compteur.

L'invention a trait également à un dispositif électronique permettant d'assurer le fonctionnement de ce boîtier de détection de la position relative d'un indicateur à aiguille.

Le concept du dispositif électronique de l'invention met en oeuvre une électronique transportable et autonome, donc de fabrication soignée et optimisée, permettant au conducteur de porter sur lui-même le système complet, détecteur-avertisseur sonore.

En effet, il est utile de préciser que les différents dispositifs électroniques assurant le fonctionnement des procédés d'alarme et dépassement de vitesse déjà cités, sont vendus avec le vehicule et sont donc inamovibles.

Selon l'invention, le dispositif électronique est remarquable en ce qu'il est constitué d'une part, d'un boîtier détecteur jouxtant le susdit écran transparent protecteur du compteur et renfermant un émetteur et un récepteur de signaux optiques qui sont placés coplanairement en face de la graduation du fond à ne pas dépasser, et d'autre part, par un boîtier de commande comprenant :

- un sous-ensemble électronique capable d'émettre, via l'émetteur du boîtier détecteur, un rayon lumineux incident suffisament puissant, pour qu'après sa réflexion sur l'indicateur à aiguille, le rayon réfléchi puisse activer le récepteur du boîtier détecteur,

- un sous-ensemble électronique d'interprétation capable de recueillir le signal énanant du récepteur du boîtier-détecteur et de le transformer en un signal de commande logique,

- un sous-ensemble électronique générateur de signal audible, commandé par le susdit signal de commande logique en sortie du susdit sous-ensemble d'interprétation,

- et un sous-ensemble d'alimentation, capable de générer une énergie continue nécessaire au fonctionnement de l'ensemble du dispositif.

L'invention venant d'être évoquée ci-dessus dans sa forme la plus élémentaire, d'autres caractéristiques de détails et d'autres avantages ressortiront plus clairement à la lecture de la description qui va suivre d'un mode de réalisation de l'invention, donné à titre non limitatif et destiné à illustrer les concepts fondamentaux de l'invention.

Cette description est annexée de dessins sur lesquels :

La figure 1 est une vue de face montrant l'adaptation de l'invention sur un compteur de vitesse classique.

La figure 2 est une vue en coupe transversale du dessin de la figure 1.

La figure 3 est un schéma synoptique du dispositif électronique, assurant le fonctionnement du procédé de détection optique de la position relative de l'indicateur aiguille, tel qu'illustré sur la figure 1.

La figure 4 est une représentation d'une première forme de modélisation électrique d'un sous-ensemble du schéma de la figure 3.

La figure 5 est une représentation d'une deuxième forme de modélisation électrique d'un sous-ensemble du schéma de la figure 3.

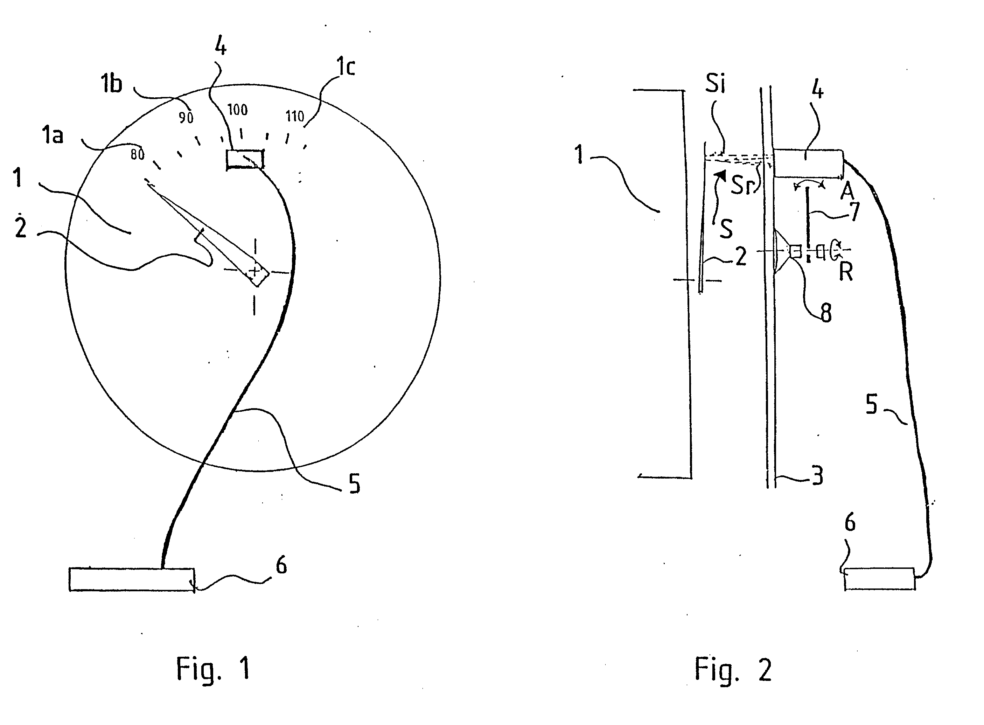

Tel qu'il est illustré sur les dessins des figures 1 et 2, le susdit compteur de vitese est constitué classiquement et successivement en épaisseur :

- d'un fond 1 non réfléchissant et comportant des graduations de repérage 1a (80 kms/heure), 1b (90 kms/heure, 1c (110 kms/heure), etc...

- d'un indicateur à aiguille 2 se déplaçant sur le fond 1 devant les graduations 1a, 1b, 1c, etc... de manière à ce que lorsque l'aiguille se trouve devant une graduation, elle indique visuellement au conducteur la vitesse à laquelle il se déplace ;

- et d'un écran de protection 3 façonné généralement dans un matériau plastique.

Le susdit dispositif de détection optique, objet de l'invention, est quant à lui constitué par un boîtier-détecteur 4 renfermant un émetteur et un récepteur d'un rayon lumineux S, conformément aux dispositions principales de l'invention. Ce boîtier 4 jouxte physiquement avec la paroi protectrice de l'écran 3 dudit compteur et est positionné en face d'une des graduations 1a, 1b, 1c du fond 1 pour prédéterminer la valeur limite de la vitesse (100 kms/heure telle qu'illustrée sur le dessin de la figure 1) à ne pas dépasser.

Lorsque le rayon lumineux S émanant de l'émetteur du boîtier-détecteur 4 et appelé rayon incident (Si) dans le contexte de la présente invention, est renvoyé lors du passage de l'indicateur à aiguille 2 se déplaçant sur le fond 1, sous la forme d'un rayon réfléchi (Sr) vers le récepteur de ce même boitier 4, un signal de détection est acheminé au travers d'un câble souple 5, à un boîtier-commande 6, renfermant l'électronique de traitement assurant entre autres, le contrôle électronique du boîtier-détecteur 4, la commande et la génération d'un signal audible.

Le câble souple 5 a pour avantage de ne disposer sur l'écran transparent protecteur 3 que le boîtier-détecteur 4 renfermant l'émetteur et le récepteur, le boîtier de commande 6 pouvant alors être déposé dans un logement du tableau de bord aménagé dudit compteur de vitesse.

Selon une caractéristique particulièrement avantageuse de l'invention, le susdit boîtier-détecteur 4 est monté articulé (selon un mouvement illustré par la flèche A) à l'extrémité d'un bras 7, lequel bras 7 est monté pivotant (flèche R) à son autre extrémité autour d'un axe dressé perpendiculairement au plan du susdit écran transparent 3 au moyen d'un dispositif de ventouse 8. Ainsi, une fois que le conducteur a fixé le dispositif à ventouse 8 sur l'écran 3, le boîtier-détecteur 4 jouxte alors l'écran 3, de telle sorte qu'il lui suffit de faire basculer dans un des sens de la flèche R, le bras 7 autour de son axe pour déplacer ledit boîtier-détecteur 4 en face d'une autre graduation d'une valeur limite à ne pas dépasser. Ainsi, une fois que le boîtier-détecteur 4 est réglé pour ne capter que les rayons réfléchis par la surface du susdit indicateur à aiguille 2, le fait de déplacer ce boîtier-détecteur 4 autour de l'axe du dispositif de ventouse 8, ne modifie en rien le réglage du boîtier-détecteur 4 dès lors que ce dernier évolue toujours dans un plan parallèle au plan du susdit indicateur à aiguille 2.

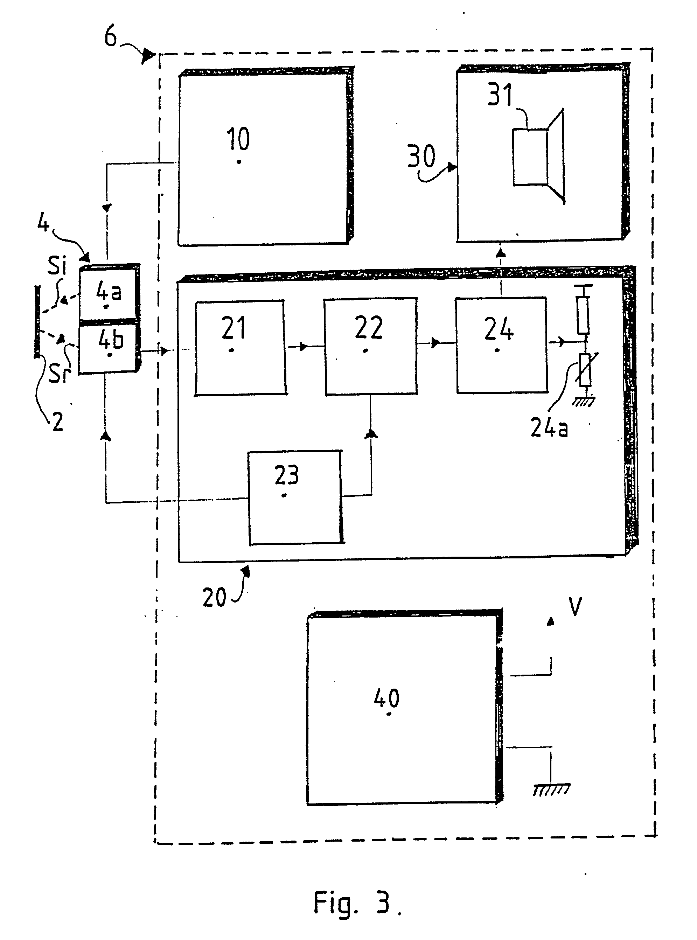

Le schéma synoptique de l'électronique de traitement, nécessaire au fonctionnement du boîtier-détecteur 4 et à la production d'un signal audible, est illustré sur le dessin de la figure 3.

Telle qu'illustrée, cette électronique comprend, un sous-ensemble électronique 10 capable de produire, grâce à l'émetteur 4a du boîtier-détecteur 4, un rayon lumineux incident Si suffisamment puissant, pour qu'après sa réflexion sur l'indicateur à aiguille 2, le rayon réfléchi Sr puisse activer le récepteur 4b du boîtier-détecteur 4. L'émetteur 4a est avantageusement et de préférence constitué par une diode émettrice d'un signal lumineux dans le spectre infra-rouge et le susdit récepteur 4b est constitué par un photo-diode réceptrice du signal réfléchi Sr dans le même spectre infrarouge. Ladite diode émettrice 4a est excitée par des signaux impulsionnels de fréquence déterminée qui sont générés par le susdit sous-ensemble électronique 10 constitué à cet effet de deux circuits monostables en cascade. Le faible rapport cyclique du signal de fréquence constante activant la diode émettrice 4a permet de faire fonctionner cette dernière dans une zone de fort courant impulsionnel tout en assurant une faible quantité d'énergie absorbée sur la source d'alimentation.

La diode émettrice à infrarouge 4a choisie émet dans le spectre infrarouge dans une longueur d'onde de l'ordre de 900 nanomètres. La photodiode réceptrice 4b a donc sa meilleure sensibilité spectrale de captation aux environs de 900 nanomètres. Cette photodiode réceptrice 4b est donc capable de transformer en variation de courant, toute variation de flux lumineux capté, plus précisemment dans le spectre où elle est la plus sensible. Pour y parvenir, un sous-ensemble électronique d'interprétation 20 pilotant la photo-diode réceptrice 4b, est à cet effet constitué par l'association :

- d'un module d'anti-saturation 21, n'autorisant que les variations en courant traversant la susdite photodiode réceptrice 4b dues aux variations de flux lumineux émis par ladite diode émettrice 4a après réflexion sur l'indicateur à aiguille 2, au rythme du signal de fréquence constante, fourni par le sous-ensemble électronique 10,

- d'un module d'amplification 22 placé en sortie du module d'anti-saturation 21, et destiné, à l'aide d'un circuit intégrant un d'amplificateur opérationnel, à augmenter l'amplitude des susdites variations en courant traversant la photodiode réceptrice 4b et à les transformer en variations de tension,

- d'un générateur de tension flottante 23 fournissant une tension continue négative flottante nécessaire aux polarisations négatives de l'amplificateur opérationnel du module d'amplification 22 d'une part, et de la photodiode réceptrice 4b d'autre part, - et d'un module comparateur-mémorisateur 24, en sortie du module d'amplification 22, destiné à comparer les signaux en sortie de ce dernier avec un signal continu de référence, afin d'activer une mémoire capable de fournir un signal de commande logique qui actionnera un sous-ensemble électronique générateur de signal audible 30.

La présence du module d'anti-saturation 21, a deux objectifs, à savoir :
- d'une part, de permettre à la photodiode réceptrice 4b de fournir de faibles variations de courant, correspondant aux variations du signal lumineux infrarouge réfléchi par le passage de l'indicateur à aiguille 2, signal émis initialement par la diode émettrice 4a,
- et d'autre part, de rendre la détection insensible aux rayonnements autres que ceux correspondants à la fréquence du signal émis par la diode émettrice 4a dans le spectre infrarouge.

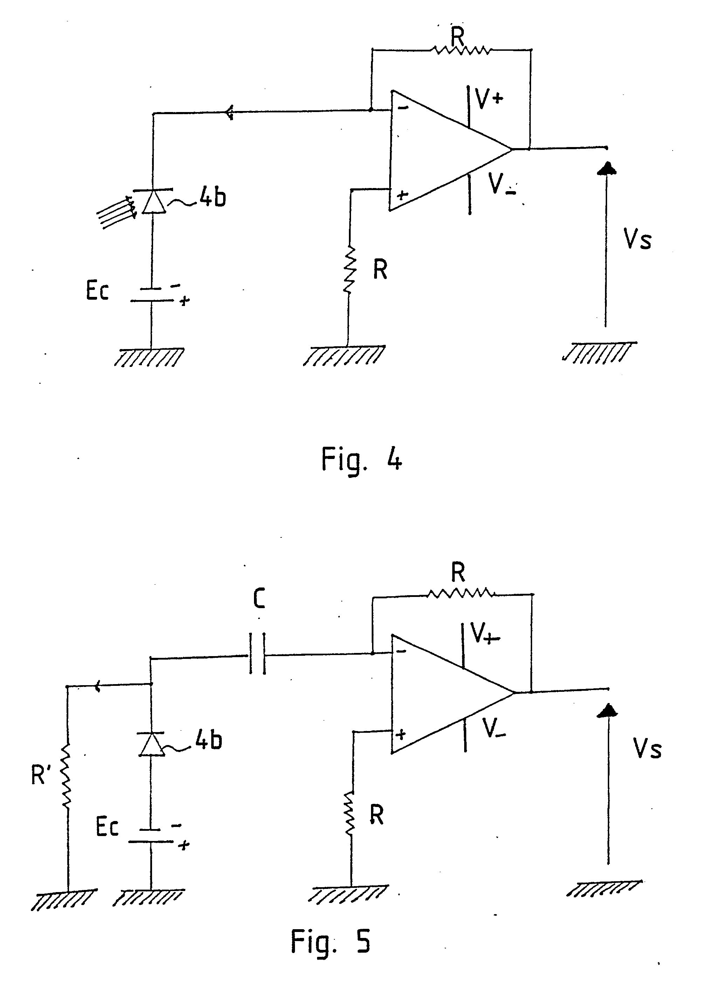

La première condition nécessite une grande dynamique de conversion courant-tension de l'amplificateur opérationnel du module d'amplification 22. Comme on peut le voir sur le schéma descriptif de modélisation électrique de la figure 4, cette première condition est obtenue grâce à une polarisation inverse Ec de la photodiode réceptrice 4b, qui sera la même que la tension négative V- nécessaire à la polarisation de l'amplificateur opérationnel. Il en résulte un montage avec la création d'une tension négative flottante, à partir d'un seule monotension positive qui sera fournie par un sous-ensemble d'alimentation 40 capable de générer l'énergie continue nécessaire au fonctionnement de l'ensemble du dispositif. Ce sous-ensemble 40 est constitué dans le cas qui nous occupe par une pile de 9 volts, pour rendre l'ensemble du dispositif de l'invention autonome.

La deuxième condition, quant à elle, paraît incompatible avec la première car la réponse spectrale de la photodiode réceptrice 4b, choisie à 900 nanomètres (longueur d'onde infrarouge d'émission de la diode émettrice 4a) pour avoir un maximum de sensibilité, a une réponse qui autorise encore environ 40 à 50 % de sensibilité dans le visible (c'est-à-dire dans un spectre de l'ordre de 600 nanomètres). On comprend que, lors d'une exposition en plein jour du boîtier-détecteur 4, cette sensibilité dans le visible provoque inévitablement un courant constant d'éclairement dans la photodiode réceptrice 4b. Le courant traversant la photodiode 4b est multiplié par la résistance R de l'amplificateur opérationnel, pour donner en sortie une tension continue constante, de telle sorte que lors d'un éclairement très prononcé, l'amplificateur opérationnel est complètement saturé· et donne un signal de sortie inexploitable pour la captation de celui émis par la diode émettrice 4a. En outre, l'augmentation de la sensibilité de la photodiode réceptrice 4b par l'addition de sa polarisation inverse Ec, ne fait qu'aggraver ce phénomène.

Aussi, la modification envisagée, illustrée sur le dessin de la figure 5, consiste à empêcher que ce courant inverse continu permanent traversant la photodiode réceptrice 4b, ne soit interprété par l'amplificateur opérationnel. A cet effet, un condensateur C de faible valeur est interposé entre la cathode de la photodiode 4b et l'entrée négative de l'amplicateur opérationnel, pour dévier de ce dernier la composante continue du courant permanent. Le rôle du condensateur C est donc de stopper les composantes continues tout en laissant passer les impulsions de courant émises par la photodiode réceptrice 4b lors de la captation d'un signal réfléchi sur l'indicateur à aiguille 2. Cependant, le courant de polarisation inverse, dû à l'existence de la tension Ec, devient nul. Aussi, selon l'invention, une résistance R′ de forte valeur est disposée en parallèle avec le circuit de la photodiode 4b pour maintenir le courant de polarisation inverse de cette dernière. Il est utile de préciser que la résistance R′ a été choisie de forte valeur pour ne pas courcircuiter la photodiode 4b sur sa polarisation inverse Ec et le condensateur C est de faible valeur pour stopper la composante continue du courant dans la photodiode 4b tout en autorisant le passage d'un courant pulsé correspondant à l'émission infrarouge réfléchie que l'on doit détecter. Comme on peut le voir, le module anti-saturation 20 a l'avantage de n'associer que des composants dit passifs qui définissent une électronique simple de construction.

Selon une caractéristique particulièrement avantageuse de l'invention, le niveau du signal continu de référence du susdit module comparateur-mémorisateur 24 est réglable pour fixer le seuil de sensibilité de l'ensemble du dispositif électronique en fonction de la distance séparant l'aiguille à détecter 2 de l'ensemble émetteur-récepteur du boîtier-détecteur 4. En effet, le niveau de ce signal continu de référence doit être plus ou moins important selon que l'indicateur à aiguille 2 est très ou peu éloigné du boîtier-détecteur 4. La comparaison du signal en sortie du module d'amplification 22 avec le signal de référence permet alors d'activer un dispositif de mémoire, pour la condition où le niveau du signal en sortie du module d'amplification 22 est supérieur au susdit signal de référence. Ainsi, ce signal de référence qui sera réglable et accessible à l'aide d'un potentiomètre 24a, permettra, lors de l'installation du boîtier-détecteur 4 sur l'écran transparent protecteur 3 du compteur à vitesse, de déterminer le seuil minimum nécessaire au déclenchement du dispositif électronique de l'invention, lors du passage de l'indicateur à aiguille 2 devant la diode émettrice 4a et la photodiode réceptrice 4b du boîtier-détecteur 4.

Selon l'invention, le susdit sous-ensemble électronique 30 générateur d'un signal audible est constitué par un résonateur piézo-électrique 31 émettant un signal audible et activé par le signal émis en sortie de la mémoire du susdit module comparateur-mémorisateur 24. La durée de ce signal audible pourra être réglable en jouant sur la durée du signal de la sortie de la mémoire.

On comprend que le procédé et le dispositif électronique, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention pris dans ses aspects et dans son esprit les plus larges.

Afin de permettre une meilleure compréhension des dessins, une liste des références avec leurs légendes est ci-après énumérée.

1 Fond du compteur de vitesse,

1a,1b,1c Graduation du fond 1.

2 Indicateur à aiguille,

3 Ecran protecteur du compteur,

4 Boîtier-détecteur renfermant la diode émettrice 4a et la photodiode réceptrice 4b d'un faisceau lumineux infrarouge S,

4a Diode émettrice d'un rayon infrarouge incident,

4b Photoréceptrice d'un rayon infrarouge réfléchi Sr,

5 Câble souple reliant le boîtier-détecteur 4 à un boîtier de commande 6,

6 Boîtier de commande renfermant l'électronique de commande,

7 Bras d'articulation du boîtier-détecteur 4,

8 Dispositif de ventouse,

10 Sous-ensemble électronique émetteur d'un signal lumineux,

20 Sous-ensemble électronique d'interprétation,

21 Module d'anti-saturation,

22 Module d'amplification,

23 Générateur de tension flottante,

24 Module comparateur-mémorisateur,

24a Potentiomètre réglable de signal de référence,

30 Sous-ensemble électronique d'alimentation,

31 Résonateur piézo-électrique,

40 Sous-ensemble électronique générateur de signal audible,

S Faisceau lumineux infrarouge,

Si Rayon incident,

Sr Rayon réfléchi,

FLECHE A Mouvement d'articulation du boîtier-détecteur 4 autour de l'extrémité du bras 7,

FLECHE R Mouvement de pivotement du bras 7 autour d'un axe perpendiculaire du dispositif de ventouse 8.

## Revendications

1. Procédé de détection du positionnement relatif d'un indicateur à aiguille (2) se déplaçant devant un fond (1) d'un compteur du type contrôle de vitesse ou compte-tours d'engins de locomotion motorisés, **CARACTERISE EN CE QU'**il consiste :
   - à repérer le passage du susdit indicateur à aiguille (2) se déplaçant devant ledit fond (1), à l'aide d'un émetteur d'un rayon incident (Si) et d'un récepteur d'un rayon réfléchi (Sr) placés coplanairement dans un même boîtier-détecteur (4), entre le conducteur et l'écran transparent (3) protégeant l'indicateur à aiguille (2), et en face de la graduation (1a, 1b, 1c,...) du fond (1) à ne pas dépasser, de telle sorte que, lorsque l'indicateur à aiguille (2) passe devant la susdite graduation, le rayon incident (Si) émis par ledit émetteur est renvoyé, par réflexion sur la surface dudit indicateur à aiguille (2), sous la forme d'un rayon réfléchi (Sr) que le susdit récepteur sera capable de capter,
   - à interpréter le susdit rayon réfléchi (Sr) capté par ledit récepteur pour le transformer en un signal de commande logique,
   - et à activer, à l'aide dudit signal de commande logique, un avertisseur électronique sonore (11).

2. Dispositif électronique permettant de mettre en oeuvre le procédé de détection selon la revendication 1, **CARACTERISE PAR LE FAIT QU'**il est constitué d'une part, par un boîtier-détecteur (4) jouxtant le susdit écran transparent protecteur (3) et renfermant un émetteur et un récepteur de signaux optiques qui sont placés coplanairement en face de la graduation (1a, 1b, 1c,...) du fond (1) à ne pas dépasser, et d'autre part, par un boîtier de commande (6) comprenant :
   - un sous-ensemble électronique (10) capable d'émettre, via l'émetteur (4a) du boîtier-détecteur (4), un rayon lumineux incident (Si) suffisamment puissant, pour qu'après sa réflexion sur l'indicateur à aiguille (2), le rayon réfléchi (Sr) puisse activer le récepteur (4b) du boîtier-détecteur (4),
   - un sous-ensemble électronique d'interprétation (20), capable de recueillir le signal émanant du récepteur (4b) du boîtier-détecteur (4) et de le transformer en un signal de commande logique,
   - un sous-ensemble électronique générateur de signal audible (30), commandé par le susdit signal de commande logique en sortie du susdit sous-ensemble d'interprétation (20),
   - et un sous-ensemble d'alimentation (40), capable de générer une énergie continue nécessaire au fonctionnement de l'ensemble du dispositif.

3. Dispositif selon la revendication 2, **CARACTERISE PAR LE FAIT QUE** le susdit émetteur est constitué par une diode émettrice (4a) d'un signal lumineux dans le spectre infrarouge et le susdit récepteur est constitué par une photodiode réceptrice (4b) du signal réfléchi dans le même spectre infrarouge, ladite diode émettrice (4a) étant excitée par des signaux impulsionnels générés par le susdit sous-ensemble électronique (10) constitué d'au moins un circuit monostable.

4. Dispositif selon la revendication 2, **CARACTERISE PAR LE FAIT QUE** le susdit sous-ensemble électronique d'interprétation (20) est constitué par l'association :

- d'un module d'anti-saturation (21), n'autorisant que les variations en courant traversant la susdite photodiode réceptrice (4b) dues aux variations de flux lumineux émis par ladite diode émettrice (4a), après réflexion sur l'indicateur à aiguille (2), au rythme du signal fourni par le sous-ensemble électronique (10),

- d'un module d'amplification (22) en sortie du module d'anti-saturation (21) et destiné à augmenter l'amplitude des susdites variations en courant en sortie de la photodiode réceptrice (4b) et à les transformer en sortie en variations de tension,

- d'un générateur de tension flottante (22) fournissant une tension continue négative flottante nécessaire aux polarisations négatives de l'amplificateur opérationnel du module d'amplification (22) et de la photodiode réceptrice (4b),

- et d'un module comparateur-mémorisateur (24) en sortie du module d'amplification (22) et destiné à comparer les signaux en sortie de ce dernier avec un signal continu de référence, afin d'activer en validation une mémoire.

5. Dispositif selon la revendication 2, **CARACTERISE PAR LE FAIT QUE** le susdit sous-ensemble électronique (30) générateur d'un signal audible est constitué par un résonateur piézo électrique (31) émettant un signal audible et activé par le signal émis en sortie de la mémoire du susdit module comparateur-mémorisateur (24).

6. Dispositif selon les revendications 2 et 4, **CARACTERISE PAR LE FAIT QUE** le susdit module d'anti-saturation (21) comprend d'une part, un condensateur (C) de faible valeur interposé entre la cathode de la photodiode réceptrice (4b) et l'entrée de l'amplificateur opérationnel du module d'amplification (22) pour dévier de ce dernier la composante continue d'un courant permanent correspondant à l'éclairement en plein jour de la photodiode réceptrice (4b), et d'autre part, une résistance (R') de forte valeur disposée en parallèle avec le circuit de la photodiode réceptrice (4b) pour maintenir le courant de polarisation inverse (Ec) de ladite photodiode (4b).

7. Dispositif selon la revendication 4, **CARACTERI-**

**SE PAR LE FAIT QUE** le niveau du signal continu de référence du susdit module comparateur-mémorisateur (24) est réglable pour fixer le seuil de sensibilité de détection en fonction de la distance séparant l'indicateur à aiguille (2) du boîtier-détecteur (4) avec sa diode émettrice (4a) et sa photodiode réceptrice (4b).

8. Dispositif selon les revendications 2 à 7 prises ensemble, **CARACTERISE PAR LE FAIT QUE** le boîtier-détecteur (4) jouxtant l'écran transparent protecteur (3) avec sa diode émettrice (4a) et sa photodiode réceptrice (4b) est relié au boîtier électronique de commande (6), via un câble souple (5).

9. Dispositif selon la revendication 8, **CARACTERISE PAR LE FAIT QUE** le susdit boîtier-détecteur (4) est monté articulé (flèche A) à l'extrémité d'un bras (7) monté pivotant (flèche R) autour d'un axe dressé perpendiculairement au plan du susdit cran transparent protecteur au moyen d'un dispositif de ventouse (8).

Fig. 2

Fig. 1

8

Fig. 3.

Fig. 4

Fig. 5

Office européen
des brevets

RAPPORT DE RECHERCHE
EUROPEENNE

Numéro de la demande

EP 90 87 0181

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,Y,A | DE-A-2 454 203 (GERHARD HOLLAND) <br> * page 7, ligne 6 - page 9, ligne 3 * <br> – – – | 1,2,3,9 | G 01 D 7/12 <br> G 01 D 5/34 |
| Y | GB-A-2 101 296 (D. A. RIPPON) <br> * page 1, ligne 44 - page 2, ligne 53; revendication 9 * <br> – – – | 3 | |
| A | PATENT ABSTRACTS OF JAPAN vol. 9, no. 259 <br> (P-397)(1982) 17 octobre 1985, <br> & JP-A-60 108715 (UBE KOSAN K.K.) 14 juin 1985, <br> * le document en entier * <br> – – – | 4,5,7 | |
| A | GB-A-2 151 774 (UNITED KINGDOM ATOMIC ENERGY AUTHORITY) <br> * figure 4 * <br> – – – | 4 | |
| A | FR-A-2 300 367 (MICROLEC) <br> * figure 1c * <br> – – – | 6 | |
| A | FR-A-2 324 006 (B. PERILHOU) <br> * page 3, lignes 7 - 11 * <br> – – – – – | 8 | |

DOMAINES TECHNIQUES
RECHERCHES (Int. Cl.5)

G 01 D

Le présent rapport de recherche a été établi pour toutes les revendications

| Lieu de la recherche | Date d'achèvement de la recherche | Examinateur |
|---|---|---|
| La Haye | 18 janvier 91 | LUT K. |